# EUROPÄISCHE PATENTSCHRIFT

(11) **EP 1 532 027 B1**
(45) Veröffentlichungstag und Bekanntmachung des Hinweises auf die Patenterteilung: **18.11.2009**
(21) Anmeldenummer: 03797205.6
(22) Anmeldetag: 23.07.2003
(51) Int. Cl.: B60R 25/04

(54) **VERFAHREN ZUM SCHUTZ GEGEN MANIPULATIONEN IN EINEM STEUERGERÄT FÜR EINE KFZ-KOMPONENTE UND STEUERGERÄT**
METHOD FOR PROTECTING A MOTOR VEHICLE COMPONENT AGAINST MANIPULATIONS IN A CONTROL DEVICE, AND CONTROL DEVICE
PROCEDE DE PROTECTION CONTRE LES MANIPULATIONS DANS UN APPAREIL DE COMMANDE POUR UN COMPOSANT DE VEHICULE ET UN APPAREIL DE COMMANDE

(30) Priorität: 21.08.2002 DE 10238094
(43) Veröffentlichungstag der Anmeldung: 25.05.2005
(73) Patentinhaber: AUDI AG, 85045 Ingolstadt (DE)
(72) Erfinder: FEILEN, Oliver, 85296 Rohrbach (DE); STADTMÜLLER, Rüdiger, 85055 Ingolstadt Etting (DE)
(74) Vertreter: Patzelt, Heike Anna Maria
(86) Internationale Anmeldenummer: PCT/EP2003/008023
(87) Internationale Veröffentlichungsnummer: WO 2004/026641

(56) Entgegenhaltungen:
- GB-A- 2 285 702

## Beschreibung

Die vorliegende Erfindung betrifft ein Verfahren zum Schutz vor Manipulationen an einem Steuergerät für mindestens eine Kfz-Komponente sowie ein Steuergerät.

In Kraftfahrzeugen werden heutzutage zur Steuerung einzelner Kfz-Komponenten Steuergeräte verwendet, wie beispielsweise das Motorsteuergerät oder das Getriebesteuergerät. Die zum Betrieb von solchen Steuergeräten erforderlichen Informationen, wie beispielsweise Programme und Daten werden verschlüsselt oder unverschlüsselt in Speicherbausteinen (E²PROM, Flash und dergleichen) abgelegt. Das Verschlüsselungsverfahren ist dabei unabhängig von einer festen Hardware-Kombination von Bausteinen und in der Regel in einem wiederbeschreibbaren Speichermedium abgelegt.

Der Nachteil solcher Steuergeräte und der verwendeten Programme ist, dass einzelne Speicherbausteine ausgetauscht werden können, bzw. die Daten auf den Speicherbausteinen über eine Diagnoseschnittstelle oder über direkten Zugriff auf den Speicherbaustein überschrieben werden können. Der Austausch eines Speicherbausteins oder das Überschreiben der auf diesem Speicherbaustein gespeicherten Daten und Programme kann, dazu führen, dass die Kfz-Komponente mit anderen Kenndaten arbeitet. Dies wird beispielsweise bei dem sogenannten Chip-Tuning durchgeführt, bei dem Speicherbausteine, die dem Motorsteuergerät zugeordnet sind, ausgetauscht bzw. die auf diesen Speicherbausteinen gespeicherten Programme und Daten, wie Kenndaten, geändert werden. Dadurch kann beispielsweise eine Erhöhung der Leistung oder des Drehmoments des Motors erzielt werden. Wird diese Manipulation durchgeführt ohne die weiteren Kfz-Komponenten, wie Ölkühler, Turbolader oder Bremsen anzupassen, so kann es zu Schäden an diesen Kfz-Komponenten und sicherheitskritischen Zuständen kommen.

Die DE 197 23 332 A1 beschreibt ein Verfahren zum Schutz eines als Steuergerät für ein Kraftfahrzeug ausgebildeten Mikrorechners gegen Manipulationen seines Programms, wobei der Mikrorechner einen nur-Lesespeicher und einen wiederbeschreibbaren Speicher aufweist. Hierbei sind in dem nur-Lesespeicher Steuerprogramme für einen Motor des Kraftfahrzeugs abgelegt. Zusätzliche Module des Programms sowie Motorparameter umfassende Daten sind in dem wiederbeschreibbaren Speicher gespeichert. In dem nur-Lesespeicher ist ein Überprüfungsprogramm vorgesehen, welches in der Lage ist, einen Inhalt des wiederbeschreibbaren Speichers auf unzulässige Änderungen, etwa einen Datenaustausch, zu untersuchen.

Aufgabe der vorliegenden Erfindung ist es daher ein Steuergerät für Kfz-Komponenten und ein Verfahren zum Schutz vor Manipulation an einem Steuergerät zu schaffen, bei dem ein Austausch eines Speicherbausteins und die Änderung der Daten auf dem Speicherbaustein nicht möglich ist, ohne die Funktionsfähigkeit des Steuergeräts zu beeinflussen oder zumindest die Veränderung zu diagnostizieren und diese ggf. zur Anzeige zu bringen.

Diese Aufgabe wird gelöst durch ein Verfahren mit den Merkmalen des Patentanspruchs 1 und durch ein Steuergerät mit den Merkmalen des Patentanspruchs 4.

Der Erfindung liegt die Erkenntnis zugrunde, dass diese Aufgabe gelöst werden kann, wenn die für den Betrieb des Steuergeräts notwendigen Daten und Programme in unterschiedlichen Speichern abgelegt werden.

Die der Erfindung zugrunde liegende Aufgabe wird daher gelöst durch ein Verfahren zur Schutz gegen Manipulationen in einem Steuergerät für mindestens eine Kfz-Komponente, wobei der für den Betrieb des Steuergeräts notwendige Code in mindestens einen Master-Code, der für die Funktion des Steuergeräts essentielle Informationen umfasst, und mindestens einen Sub-Code, der weitere Informationen für den Betrieb des Steuergeräts umfasst, unterteilt wird, wobei zumindest der Mastercode in einem lesegeschützten, nur einmalig beschreibbaren Bereich des Microrechners abgelegt wird und der Mastercode die Manipulation des Subcodes überwacht.

Durch die Aufteilung des Codes, der für den Betrieb des Steuergeräts notwendig ist, kann zum einen ein Teil, der beispielsweise bei Reparaturen reprogrammiert bzw. upgedatet werden muss, zugänglich gemacht werden, ohne, dass der Teil, der für den Betrieb des Steuergeräts essentielle Informationen enthält, zugänglich sein muss. Weiterhin ist durch die Unterteilung des Codes ein Ablegen des Codes in unterschiedlichen des Codes ein Ablegen des Codes in unterschiedlichen Speichern möglich, was eine Erhöhung der Sicherheit gegen Manipulationen mit sich bringt. Der Master-Code kann beispielsweise das eigentliche Steuerprogramm, das die Berechnung von Motorlast und Drehzahl und der Stellgrößen und Stellwerte unter Zugriff auf Kennfelder und die Steuersignalerzeugung für angeschlossene Aktuatoren des Steuergeräts umfasst, darstellen. In dem Sub-Code kann dann das Programm für z.B. abgas- und komfortverbessernde Massnahmen enthalten sein. Beide Codes können zusätzlich oder alternativ Daten enthalten.

Erfindungsgemäß wird der Mastercode in einem lesegeschützten, nur einmalig beschreibbaren OTP (one-time-programmable)-Bereich des Microrechners abgelegt. Hiermit ist zum einen eine unberechtigte Änderung des Master-Codes unmöglich und zum anderen kann eine Vervielfältigung der Software, die zum Betreiben des Steuergeräts notwendig ist, vermieden werden.

Der Subcode kann in einem wiederbeschreibbaren Bereich des Microrechners oder in einem wiederbeschreibbaren Bereich eines externen Speicherbausteins abgelegt werden. Dadurch kann der Subcode upgedated oder reprogrammiert werden. Durch die in dem Mastercode beinhaltete Überwachungsfunktion gegen Manipulation in dem Subcode kann aber ein unerlaubtes Ändern des Subcodes vermieden werden.

Weiterhin wird die Aufgabe, die der Erfindung zugrunde liegt, durch ein Steuergerät für eine Kfz-Komponente, das zumindest einen Microrechner (µC) und zumindest einen Speicherbaustein umfasst gelöst, wobei der für den Betrieb des Steuergeräts notwendige Code in zumindest einen Master-Code, der für die Funktion des Steuergeräts essentielle Informationen umfasst, und zumindest einen Sub-Code, der weitere Informationen für den Betrieb des Steuergeräts umfasst, unterteilt ist, und zumindest der Master-Code in einem lesegeschützten, nur einmalig beschreibbaren Bereich des Microrechner abgelegt ist und der Master-Code ein Softwarefunktionsmodul zur Manipulationsdetektion innerhalb des Sub-Codes enthält.

Das Softwarefunktionsmodul kann beispielsweise eine lineare oder CRC-Checksummenbildung, eine Hash-Wertbildung oder ein Verschlüsselungsverfahren umfassen.

Vorzugsweise ist zumindest ein Teil des Subcodes verschlüsselt auf einem wiederbeschreibbaren Bereich abgelegt und der Mastercode dient zum Erzeugen eines Schlüssels für die Entschlüsselung. Der Teil des Sub-Codes, der verschlüsselt abgelegt ist, kann beispielsweise einen Fingerprint darstellen.

Merkmale und Details, die im Zusammenhang mit dem erfindungsgemäßen Verfahren beschrieben werden, gelten entsprechend für das erfindungsgemäße Steuergerät und umgekehrt.

Die Erfindung wird im Folgenden anhand der beiliegenden Zeichnungen, die sich auf mögliche Ausführungsbeispiele der Erfindung beziehen, beschrieben. Es zeigen:
Figur 1: eine schematische Blockdarstellung einer Ausführungsform des erfindungsgemäßen Steuergeräts; und
Figur 2: eine schematische Blockdarstellung einer weiteren Ausführungsform des erfindungsgemäßen Steuergeräts.

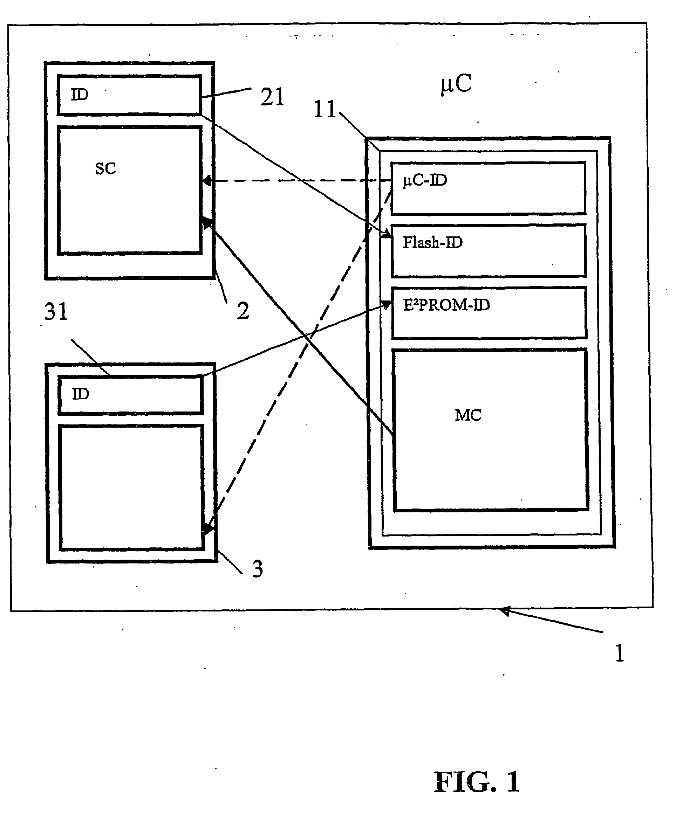

In Figur 1 ist eine Ausführungsform eines erfindungsgemäßen Steuergeräts dargestellt. Der Aufbau von Steuergeräten, wie beispielsweise Motorsteuergeräten, ist hinlänglich aus dem Stand der Technik bekannt, so dass hierauf nur insoweit eingegangen wird, wie dies für das Verständnis der Erfindung erforderlich ist. Das Steuergerät 1 umfasst in der dargestellten Ausführungsform einen Microcomputer µC, einen Flash-Speicher 2 und einen EEPROM (E²PROM) 3. Der Flash-Speicher 2 und der E²PROM 3 weisen jeweils einen OTP-Bereich 21, 31 auf. Diese sind vorzugsweise nicht lesegeschützt ausgestaltet. Auch in dem µC ist ein OTP-Bereich 11 vorgesehen.

Die Speicherbausteine Flash 2, E²PROM 3 sind in der dargestellten Ausführungsform mit bausteinindividuellen Identifikationsnummern ID versehen. Diese werden in der Regel beim Hersteller des Bausteins geschrieben und in den OTP-Bereich 21, 31 der einzelnen Bausteine abgelegt.

Im Herstellungsprozess des Steuergeräts werden bei der Erstinbetriebnahme des Steuergeräts von dem Microrechner µC die ID's der einzelnen Speicherbausteine 2, 3 ausgelesen und in einen einmalig beschreibbaren OTP-Bereich 11 des µC abgelegt. Ab diesem Zeitpunkt ist die Funktion des Steuergeräts 1 nur in Verbindung mit den dem µC bekannten ID's der externen Speicherbausteine 2, 3 möglich.

Bei jeder weiteren Inbetriebnahme des Steuergeräts 1 wird von dem µC die ID aller mit diesem verbundenen Speicherbausteine 2, 3 erneut ausgelesen. In einer Vergleichseinheit können dann diese aktuellen ID's mit den ursprünglichen Kennungen, die in dem OTP-Bereich 11 des µC abgelegt sind, verglichen werden. Wird bei diesem Vergleich festgestellt, dass eine der ID's nicht mit einer der ursprünglichen ID's übereinstimmt, so wird das Steuergerät an seiner Funktion gehindert oder zumindest die Veränderung diagnostiziert und diese ggf. zur Anzeige gebracht.

Der Code zum Betreiben des Steuergeräts ist in einen Master-Code (MC) und einen Sub-Code (SC) unterteilt. Der Mastercode MC enthält elementare, essentielle Funktionalitäten zum Betrieb des Steuergeräts, z.B. das Programm zur Signalerzeugung für angeschlossene Aktuatoren (nicht dargestellt) des Steuergeräts oder das Programm für die Berechnung der Stellgrößen und Stellwerte. Der Mastercode MC kann weiterhin Daten umfassen. In dem Sub-Code SC sind weitere Programme und Daten enthalten. Das Steuergerät ist nur funktionsfähig unter Verwendung beider Codes MC und SC. In der dargestellten Ausführungsform ist der Sub-Code SC in einem wiederbeschreibbaren Bereich des Flash-Speichers 2 enthalten. Der Master-Code MC ist in einem OTP-Bereich 11 des Microrechners µC enthalten. Der Master-Code ist vorzugsweise gegen Auslesen über Kontaktierung geschützt. Dies kann beispielsweise physikalisch durch Durchlegieren einer Transistorstrecke oder schaltungstechnisch erzielt werden. Der Sub-Code SC kann im Gegensatz zu dem Master-Code MC modifiziert beziehungsweise überschrieben werden. Dies erlaubt ein Updaten des Subcodes oder ein Reprogrammieren.

Der µC weist weiterhin eine Identifikationsnummer µC-ID auf. Auch diese ist in einem lesegeschützten OTP-Bereich des µC abgelegt. In dem E²PROM sind weitere Daten für den Betrieb des Steuergeräts in einem wiederbeschreibbaren Bereich abgelegt. Diese Daten können beispielsweise Adaptionswerte sowie Leerlaufdrehzahlen bei einem Motorsteuergerät sein.

Beim Initialisieren des Steuergeräts lernt der Microrechner µC die in dem OTP-Bereich 21, 31 der Speicherbausteine 2, 3 abgelegten und dadurch nicht veränderbaren Identifikationsnummern an und legt diese in einem OTP-Bereich des Microrechners µC, der optional auch lesegeschützt ausgestaltet sein kann, ab.

Von diesem Zeitpunkt an sind dem Microrechner µC die mit diesem verbundenen Speicherbausteine 2, 3 über ihre ID bekannt.

Zusätzlich können die in dem Microrechner abgelegten ID's der Speicherbausteine auch zur Verschlüsselung von Daten oder Programmen dienen. So können die auf dem E²PROM abgelegten Daten beispielsweise durch ein symmetrisches Verschlüsselungsverfahren codiert werden, in dem der Schlüssel zumindest einen Teil der ID zumindest eines der Speicherbausteine 2, 3 umfasst. Bei einem Motorsteuergerät können in dem E²PROM beispielsweise Lernwerte, Fertigungsdaten und Anpassungswerte, gespeichert sein. Zur Verschlüsselung sind grundsätzlich alle symmetrischen Verschlüsselungsverfahren geeignet, die die Einbeziehung eines steuergeräteindividuellen Kennzeichens erlauben. Vorzugsweise werden die Daten des E²PROM durch einen Schlüssel verschlüsselt, der zusätzlich oder alternativ zu der ID der externen Speicherbausteine die ID des Microrechners µC umfasst. Hierdurch wird eine steuergeräteindividuelle Verschlüsselung erzielt, die ein Austauschen des E²PROM oder ein Überschreiben der darauf gespeicherten Daten unmöglich macht bzw. den Betrieb des Steuergeräts nach einer solchen Manipulation verhindert. Der Schlüssel wird vorzugsweise in dem RAM-Speicher des Microrechners µC abgelegt. Dadurch wird der Schlüssel bei jedem Hochlaufen des Steuergeräts unter Einbeziehung eines steuergeräteindividuellen Kennzeichens (z.B. der ID des µC und gegebenenfalls der ID's der Speicherbausteine) gebildet und ist somit steuergeräteindividuell.

Weiterhin kann der Subcode SC auf dem Flash-Speicher 2 ganz oder teilweise verschlüsselt abgelegt sein. Auch für diese Verschlüsselung kann die ID der einzelnen Speicherbausteine oder des Microrechners bzw. ein Teil dieser ID in den Schlüssel integriert werden. Die Entschlüsselung der Daten in dem Sub-Code wird durch den Master-Code durchgeführt. Da dieser in einem lesegeschützten Bereich des Microrechners abgelegt ist, kann ein Auslesen des Programms und damit eine Vervielfältigung der Software verhindert werden.

Die Überwachung des Sub-Codes gegenüber Manipulation, die durch den µC im Master-Code sichergestellt wird, kann auch über andere Verfahren als die Verschlüsselung erfolgen. So können zusätzlich oder alternativ lineare/CRC-Checksummenbildung oder Hash-Wertbildung verwendet werden. Zur Erkennung einer vorgenommenen Manipulation der Daten und gegebenenfalls von Teilen des Subcodes werden z.B. über ausgewählte Bereiche lineare Checksummen gebildet und das Ergebnis verschlüsselt als Fingerprint in den Sub-Code eingebracht. Der Mastercode berechnet im Steuergerätebetrieb beispielsweise bei einem Signal an Klemme 15 über den gleichen vordefinierten Bereich den Vergleichswert (z.B. lineare Checksumme) und prüft diesen gegen den entschlüsselten im Sub-Code verschlüsselt abgelegten Referenzwert. Die Art der Manipulationserkennung kann beliebig gewählt werden.

Nach der Erkennung einer Manipulation werden vom Master-Code Maßnahmen eingeleitet, die gegebenenfalls zum Steuergeräteausfall führen.

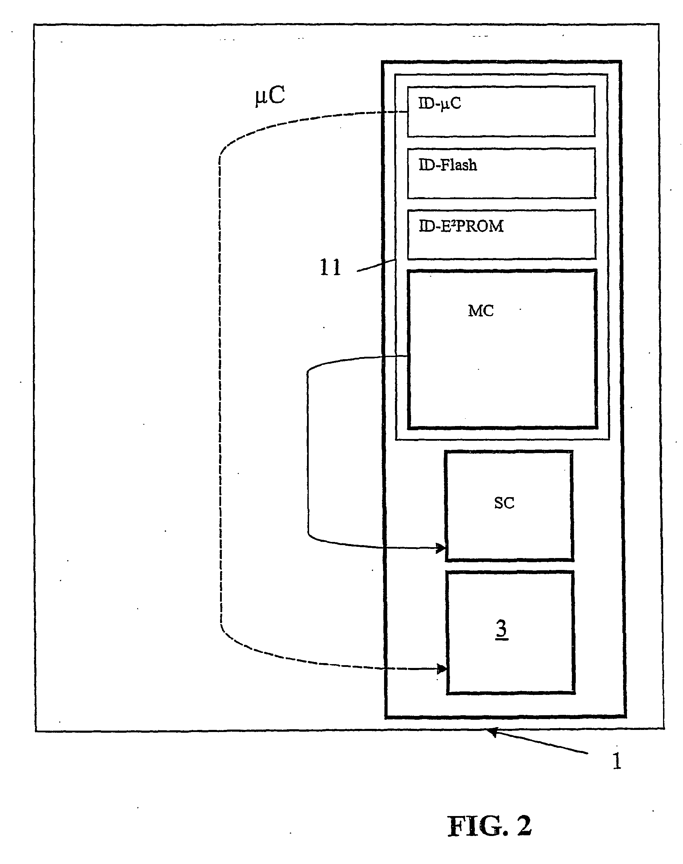

In Figur 2 ist eine weitere Ausführungsform des erfindungsgemäßen Steuergeräts gezeigt. Bei dieser Ausführungsform sind die Speicherbausteine 2 und 3 in den Microrechner µC integriert. Der µC weist hierbei einen embedded Flash-Speicher auf, wobei der E²PROM emuliert wird. Diese Ausgestaltung des Steuergeräts weist zwar den Vorteil auf, dass ein Austausch der Speicherbausteine zuverlässig verhindert werden kann, allerdings sind die Daten bei der Emulation des E²PROM nur blockweise überschreibbar.

Das Verfahren zum Schutz gegen Manipulation erfolgt bei diesem Steuergerät mit internem Speicher im wesentlichen wie das oben für Steuergeräte mit externen Speichern beschriebene. Auch hierbei können insbesondere die Daten des emulierten E²PROM verschlüsselt abgelegt werden und durch einen Schlüssel, der zumindest eine individuelle Kennung des Steuergeräts, wie die µC-ID und/oder die Flash-ID umfasst, entschlüsselt werden. Ebenso können die in dem Subcode, der in dem Flash-Speicher des µC abgelegt ist, enthaltenen verschlüsselten Daten oder Fingerprints durch den Mastercode entschlüsselt werden. Auch hierbei wird vorzugsweise eine steuergeräteindividuelle Kennung in dem Schlüssel integriert.

Die Erfindung ist nicht auf die dargestellten Ausführungsformen beschränkt. So kann als Kennung der einzelnen Speicherbausteine beispielsweise das Herstellungsdatum des Steuergeräts in Betracht kommen. Hierdurch kann eine Manipulation während der Garantiezeit verhindert werden.

Das Steuergerät kann im Sinne dieser Erfindung beispielsweise ein Motorsteuergerät, ein Getriebesteuergerät oder auch ein Kombiinstrument darstellen.

Mit einem erfindungsgemäßen Verfahren und dem erfindungsgemäßen Steuergerät können gegenüber herkömmlichen Steuergeräten eine große Anzahl von Vorteilen erzielt werden.

Mit dem erfindungsgemäßen Steuergerät kann auf zuverlässige Weise ein Austausch einzelner oder mehrerer Bausteine verhindert werden, da durch einen solchen Austausch die Funktion des Steuergeräts verhindert werden kann. Das Auslesen eines für die Funktion der Steuerung zwingend erforderlichen Teils des Programms bzw. der Daten ist nicht möglich, wenn dieser Teil in dem lesegeschützten OTP-Bereich abgelegt ist. Damit kann eine Vervielfältigung bzw. eine Modifikation der Software verhindert werden. Auch ist der Zugriff auf vertrauliche Daten über die Kontaktierung des Bausteins nicht möglich, wenn diese in dem lesegeschützten OTP-Bereich des µC abgelegt sind. Besonders sicher kann das Steuergerät vor Manipulationen geschützt werden, indem es nur in der Kombination von Master- und Sub-Code lauffähig ist. Eine Veränderung des im reprogrammierbaren, gegebenenfalls externen Speicher, z.B. Flash, abgelegten Sub-Codes führt ohne eine Anpassung des Mastercodes zu einem Steuergeräteausfall. Weiterhin können Daten, die beispielsweise auf einem E²PROM abgelegt sind, steuergeräteindividuell verschlüsselt werden. Auch die Entschlüsselung solcher Daten kann von einer Kennung des Steuergeräts abhängig gemacht werden. Zusätzliche Sicherheit kann dadurch geschaffen werden, dass die Ver- und Entschlüsselung von dem Verbund der einzelnen Bausteine mit den dem µC bekannten ID's abhängig gemacht wird.

Zusammenfassend kann also festgestellt werden, dass durch das Aufteilen des Codes in einen Master- und einen Sub-Code die Manipulation von Steuergeräten, wie beispielsweise Chip-Tuning bei Motorsteuergeräten, zuverlässig vermieden werden kann.

## Patentansprüche

1. Verfahren zum Schutz gegen Manipulationen in einem Steuergerät für mindestens eine Kfz-Komponente, das zumindest einen Microrechner (µC) und zumindest einen Speicherbaustein (2, 3) umfasst, wobei der für den Betrieb des Steuergeräts (1) notwendige Code in mindestens einen Master-Code (MC), der für die Funktion des Steuergeräts (1) essentielle Informationen umfasst, und mindestens einen Sub-Code (SC), der weitere Informationen für den Betrieb des Steuergeräts (1) umfasst, unterteilt wird, wobei zumindest der Mastercode (1) in einem nur einmalig beschreibbaren Bereich (11) des Microrechners (µC) abgelegt wird und der Mastercode (MC) die Manipulation des Subcodes (SC) überwacht, **dadurch gekennzeichnet, dass** der nur einmalig beschreibbare Bereich (11) des Microrechners (µC) lesegeschützt ausgebildet wird.

2. Verfahren nach Anspruch 1, **dadurch gekennzeichnet, dass** der Sub-code (SC) in einem wiederbeschreibbaren Bereich des Microrechners abgelegt wird.

3. Verfahren nach Anspruch 1, **dadurch gekennzeichnet, dass** der Sub-code (SC) in einem wiederbeschreibbaren Bereich mindestens eines externen Speicherbausteins (2) abgelegt wird.

4. Steuergerät für eine Kfz-Komponente das zumindest einen Microrechner (µC) und zumindest einen Speicherbaustein (2, 3) umfasst, wobei der für den Betrieb des Steuergeräts (1) notwendige Code in zumindest einen Master-Code (MC), der für die Funktion des Steuergeräts (1) essentielle Informationen umfasst, und zumindest einen Sub-Code (SC), der weitere Informationen für den Betrieb des Steuergeräts (1) umfasst, unterteilt ist, und zumindest der Master-Code (MC) in einem lesegeschützten, nur einmalig beschreibbaren Bereich (11) des Microrechners (µC) abgelegt ist und der Master-Code (MC) ein Softwarefunktionsmodul zur Manipulationsdetektion innerhalb des Sub-Codes (SC) enthält.

5. Steuergerät nach Anspruch 4, **dadurch gekennzeichnet, dass** der Sub-Code (SC) in einem wiederbeschreibbaren Bereich des Microrechners (µC) abgelegt ist.

6. Steuergerät nach Anspruch 4, **dadurch gekennzeichnet, dass** der Sub-Code (SC) in einem wiederbeschreibbaren Bereich mindestens eines externen Speicherbausteins (2, 3) abgelegt ist.

7. Steuergerät nach einem der Ansprüche 4 bis 6 **dadurch gekennzeichnet, dass** zumindest ein Teil des Subcodes (SC) verschlüsselt in einem wiederbeschreibbaren Bereich abgelegt ist und der Mastercode (MC) zum Erzeugen eines Schlüssels für die Entschlüsselung dient.

## Claims

1. Method for protecting against manipulations in a control device for at least one motor vehicle component, which control device includes at least one microcomputer (µC) and at least one memory module (2, 3), the code necessary for operation of the control device (1) being subdivided into at least one master code (MC) which contains information essential for the functioning of the control device (1) and at least one subcode (SC) which contains further information for operation of the control device (1), at least the master code (MC) being stored in a write-once-only area (11) of the microcomputer (µC) and the master code (MC) monitoring the manipulation of the subcode (SC), **characterised in that** the write-once-only area (11) of the microcomputer (µC) is in read-protected form.

2. Method according to Claim 1, **characterised in that** the subcode (SC) is stored in a rewritable area of the microcomputer.

3. Method according to Claim 1, **characterised in that** the subcode (SC) is stored in a rewritable area of at least one external memory module (2).

4. Control device for a motor vehicle component, comprising at least one microcomputer (µC) and at least one memory module (2, 3), wherein the code necessary for operation of the control device (1) is subdivided into at least one master code (MC) which contains information essential for the functioning of the control device (1) and at least one subcode (SC) which contains further information for operation of the control device (1), and at least the master code (MC) is stored in a read-protected, write-once-only area (11) of the microcomputer (µC) and the master code (MC) contains a software function module for detection of manipulation within the subcode (SC).

5. Control device according to Claim 4, **characterised in that** the subcode (SC) is stored in a rewritable area of the microcomputer (µC).

6. Control device according to Claim 4, **characterised in that** the subcode (SC) is stored in a rewritable area of at least one external memory module (2, 3).

7. Control device according to any one of Claims 4 to 6, **characterised in that** at least a part of the subcode (SC) is stored in encrypted form in a rewritable area and the master code (MC) serves to generate a key for the decryption.

## Revendications

1. Procédé de protection contre les manipulations dans un appareil de commande pour au moins un composant de véhicule, comportant au moins un micro-ordinateur (µC) et au moins un module de mémoire (2, 3), le code nécessaire au fonctionnement de l'appareil de commande (1) étant partagé en au moins un code maître (MC ou Master Code), lequel comporte des informations essentielles pour le fonctionnement de l'appareil de commande (1), et en au moins un sous-code (SC ou Sub-Code), lequel comporte d'autres informations pour le fonctionnement de l'appareil de commande (1), au moins le code maître (1) étant mis en mémoire dans une zone à enregistrement unique (11) du micro-ordinateur (µC) et le code maître (MC) surveillant la manipulation du sous-code (SC), **caractérisé en ce que** la zone à enregistrement unique (11) du micro-ordinateur (µC) est réalisée de manière à être protégé en lecture.

2. Procédé selon la revendication 1, **caractérisé en ce que** le sous-code (SC) est mis en mémoire dans une zone réinscriptible du micro-ordinateur.

3. Procédé selon la revendication 1, **caractérisé en ce que** le sous-code (SC) est mis en mémoire dans une zone réinscriptible d'au moins un module de mémoire externe (2).

4. Appareil de commande pour un composant de véhicule comportant au moins un micro-ordinateur (µC) et au moins un module de mémoire (2, 3), le code nécessaire pour faire fonctionner l'appareil de commande (1) étant partagé en au moins un code maître (MC ou Master Code), lequel comporte des informations essentielles pour le fonctionnement de l'appareil de commande (1), et en au moins un sous-code (SC ou Sub-Code), lequel comporte d'autres informations pour le fonctionnement de l'appareil de commande (1), et au moins le code maître (1) étant mis en mémoire dans une zone protégée en lecture, à enregistrement unique (11) du micro-ordinateur (µC), et le code maître (MC) comprenant un module de fonction logiciel pour la détection des manipulations à l'intérieur du sous-code (SC).

5. Appareil de commande selon la revendication 4, **caractérisé en ce que** le sous-code (SC) est mis en mémoire dans une zone réinscriptible du micro-ordinateur (µC).

6. Appareil de commande selon la revendication 4, **caractérisé en ce que** le sous-code (SC) est mis en mémoire dans une zone réinscriptible d'au moins un module de mémoire externe (2, 3).

7. Appareil de commande selon l'une quelconque des revendications 4 à 6, **caractérisé en ce qu'**au moins une partie du sous-code (SC) est mise en mémoire de manière codée dans une zone réinscriptible, et **en ce que** le code maître (MC) sert à générer une clé pour le décodage.
